# EUROPEAN PATENT APPLICATION

(11) **EP 4 602 913 A1**
(43) Date of publication of application: **20.08.2025**
(21) Application number: 24157420.1
(22) Date of filing: 13.02.2024
(51) Int. Cl.: A01K 1/03

(54) **AN ACCOMMODATION FACILITY FOR ANIMALS**

(71) Applicant: Rizzi, Michela, 36077 Altavilla Vicentina (IT)
(72) Inventor: Rizzi, Michela, 36077 Altavilla Vicentina (IT)
(74) Representative: Trentin, Michele

(57) **Abstract**

A modular accommodation facility for animals comprising one or more boxes **(2)** which can be coupled together. The accommodation facility **(1)** also comprises a control logic unit **(11)**, a memory circuit **(12)** operatively connected to the control logic unit **(11)**, a computer product stored in the memory circuit **(12)** and suitable to be run by the control logic unit **(11)**, a recognition means **(4)** of identification data of the animal processed by the computer product so as to generate one or more unique codes to identify an animal-owner pair.

## Description

### Field of application

The present invention is applicable to the field dedicated to pets and, in particular, relates to an accommodation facility for animals.

### State of the art

Increasingly, those who adopt an animal want to take it with them during their normal daily activities. This ranges from walks, to holidays, to work.

Inevitably, however, at certain times it is not possible for one's pet to accompany them, either because certain work situations do not allow it or because the activity that the owner will carry out could pose dangers for the animal itself.

To remedy the above, it therefore occurs that the animal is left alone at home. However, this is not possible when the owner is forced to travel away from home for several days.

Typically, on such occasions, if the accommodation facilities of the destination are not equipped to accommodate the animal, the latter is entrusted for the entire duration of the owner's trip to an ad hoc facility near their home.

However, such a solution may also not be convincing for those who see the animal as a full-fledged member of the family and who, therefore, do not feel confident in entrusting their life partner to others for an extended period of time.

As a result, hotels are increasingly accepting pets. Even on such occasions, however, the aforementioned problems are not completely resolved. In fact, animals cannot typically be left alone in hotels for hours because they are not equipped with a special area for animals. Not only that. Often, hotels do not have qualified staff to manage and assist animals during the absence of their owners.

The above considerations also apply to situations in which the owner participates for work, for example, in trade fairs outside the city. Typically, there are no areas in the fairs where a pet can be left for the time in which possible customers and/or suppliers are met or in any case during the visit to the exhibition stands.

In all the situations described above, which are merely a few examples of the scope of the present invention, the owner needs a place to safely leave his pet for a certain period of time, without however depriving himself of its company for entire days.

On the other hand, the managers would often like to create *ad hoc* areas for animals. However, the facilities of the prior art are neither easy to install nor easy to manage.

### Presentation of the invention

The aim of the present invention is to at least partially overcome the drawbacks highlighted above.

In particular, an object of the present invention is to provide an accommodation facility for animals which is easy to manage.

In other words, an object of the present invention is to provide an accommodation facility for animals which allows a manager of a hotel, museum, cable car, bathing facility, or any other premises suitable for accommodating people, to accommodate pets.

It follows that a further object of the present invention is to provide an accommodation facility for animals which is expandable at will without creating discomfort for the manager.

In fact, another object of the present invention is to provide an accommodation facility for animals which is easily installable.

It follows from the above that a further object of the present invention is to provide an accommodation facility which is adaptable in capacity to the number of animals to be hosted.

It follows that, another object of the present invention is to provide an accommodation facility for animals which allows the owner to bring the animal with him whenever he travels away from home.

Moreover, a further object of the present invention is to provide an accommodation facility for animals which is easy to manage and which does not require an excessive number of personnel or which does not require specialised personnel.

Indeed, another object of the present invention is to provide a completely autonomous accommodation facility for animals.

Said objects, as well as others which will become clearer below, are achieved by an accommodation facility for animals in accordance with the following claims, which are to be considered an integral part of the present patent.

In particular, the accommodation facility for animals of the invention, like all accommodation facilities for animals of the prior art, comprises one or more boxes.

Advantageously, the presence of one or more boxes, depending on needs, allows one or more animals to be hosted in the accommodation facility, keeping them safely, also separated from each other in different boxes.

To this end, according to an aspect of the invention, the accommodation facility for animals is modular and any number of boxes can be coupled together.

Advantageously, the modularity of the accommodation facility allows it to be adapted to the number of animals it must host, without limits except, of course, those due to the space available to the manager of the facility where the boxes are placed.

It follows, still advantageously, that the manager can achieve the accommodation he wishes and over time vary the accommodation capacity of the facility itself.

According to another aspect of the invention, the accommodation facility comprises at least one means for recognising identification data at least of the animal. In particular, the identification data collected by the recognition means allows the accommodation facility to generate one or more unique codes to identify at least one animal-owner pair. To this end, according to a further aspect of the invention, the accommodation facility for animals comprises at least one computer product.

Advantageously, the computer product makes it possible to process the identification data collected and, consequently, generate the unique animal-owner reference code.

Still advantageously, the above ensures the owner of the animal the guarantee that the latter cannot be picked up by anyone other than the owner himself.

In fact, advantageously, the generation of the unique code makes the accommodation facility particularly safe, as it does not allow the delivery of the dog to anyone who may have stolen the identity of the animal's real owner.

It follows, advantageously, that this makes it possible to dispense with the use of qualified personnel for managing the accommodation facility for animals of the invention. In fact, advantageously, to take advantage of a box of the accommodation facility of the invention, it will be sufficient to identify at least one specific animal so that the correct pair can be identified and therefore, prevent an owner from subsequently picking up an animal that is not his own.

Obviously, all of the above is allowed by the fact that the accommodation facility comprises, according to another aspect of the invention, at least one control logic unit adapted to run the aforesaid computer product stored in a memory circuit.

Moreover, the presence of a logical unit and a memory allows, advantageously, to computerise not only the identification and recognition process of the animal-owner pair, but also the possible subsequent management of the animal while it is housed in the accommodation facility.

### Brief description of the drawings

Further features and advantages of the invention will become more evident in light of the detailed description of a preferred but not exclusive embodiment of an accommodation facility for animals according to the invention, illustrated by way of non-limiting example with the aid of the accompanying drawings, in which:

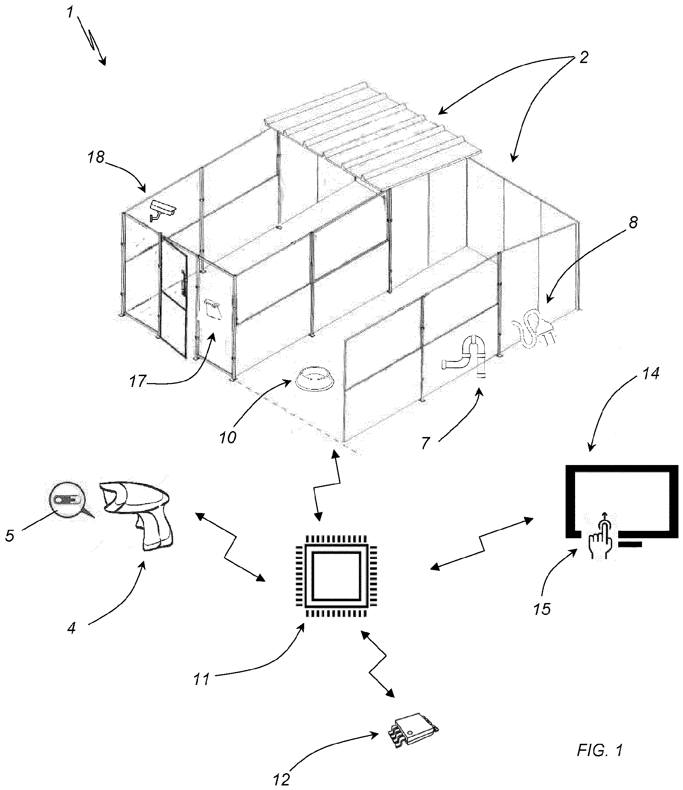

FIG. 1 depicts a schematic view of an accommodation facility for animals of the invention;

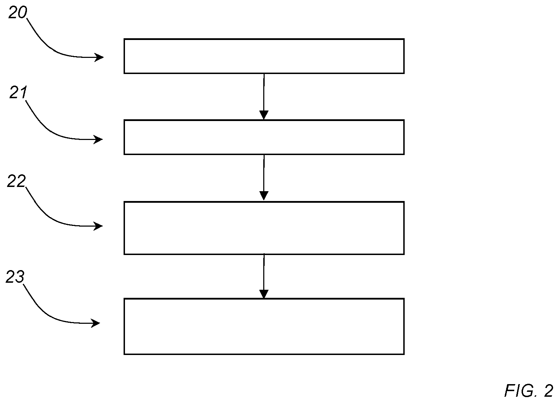

FIG. 2 depicts an exemplary block diagram of the method of the invention.

### Detailed description of some preferred example embodiments

With reference to the aforementioned drawings, an accommodation facility **1** for animals is disclosed.

According to an aspect of the invention, it is modular, being able to couple any number of boxes **2** together. The latter in particular, according to another aspect of the invention, have different dimensions from each other.

Advantageously, the different size of the boxes **2** allows to optimise the space available for the accommodation facility **1.** In fact, still advantageously, the smaller-sized boxes **2** can also be placed on top of larger boxes **2.**

Moreover, the different size of the boxes **2,** advantageously, allows to host animals of different sizes.

However, the different shape of the boxes **2** must not be considered a limiting feature for different embodiments of the invention according to which the boxes all have the same size.

With reference to the modularity of the accommodation facility **1** of the invention, it should be noted that, advantageously, it allows one or more animals to be hosted, depending on the needs, keeping them safely separated from each other in different boxes **2.**

Still advantageously, the modularity of the accommodation facility **1** allows the manager to create the accommodation he wishes and vary the accommodation capacities over time, according to needs.

From the above it follows that, advantageously, the modularity of the accommodation facility **1** is versatile since it can potentially be capable of hosting an indefinite number of animals. In fact, the only limit is that due to the space available to the facility manager where the accommodation facility **1** of the invention is located.

According to another aspect of the invention, the accommodation facility **1** comprises recognition means **4** of animal identification data. In particular, the identification data collected by the recognition means **4** allows the accommodation facility **1** to generate one or more unique codes to identify an animal-owner pair. To this end, according to a further aspect of the invention, the accommodation facility **1** for animals comprises a computer product.

Advantageously, the computer product makes it possible to process the identification data collected and, consequently, generate the unique animal-owner reference code.

Still advantageously, the above ensures the owner of the animal the guarantee that the latter cannot be picked up by anyone other than the owner himself.

In fact, advantageously, the above makes the accommodation facility **1** particularly safe as it does not allow the delivery of the dog to anyone who may have stolen the identity of the animal's real owner.

It follows, advantageously, that this allows to dispense with the use of qualified personnel for managing the accommodation facility **1** for animals of the invention. In fact, advantageously, to take advantage of a box **2** of the accommodation facility **1** of the invention, it will be sufficient to identify at least one specific animal so that the correct pair can be identified and therefore, prevent an owner from subsequently picking up an animal that is not his own.

It follows from the above that the accommodation facility **1** of the invention even allows to dispense of the use of personnel for the management thereof.

More in detail, according to another aspect of the invention, the recognition means **4** comprise a microchip reader **5** of the animal.

Advantageously, the animal is identified by means of the microchip reader **5.**

Obviously, however, the presence of the microchip reader **5** should not be considered a limiting feature for different embodiments of the invention according to which the accommodation facility for animals comprises other unique identification systems of the animal.

Similarly, with regard to the recognition means, according to some embodiments of the invention, it comprises identification systems of the owner, such as a reader of biometric data or in general other identification data thereof. Thereby, the unique identification code of the animal-owner pair is processed on the basis, merely by way of example, of the number of the box in which the animal is inserted and an identification datum of the owner. As mentioned, such processing of the unique code is only an exemplary embodiment of the present invention. In fact, according to another embodiment variant, the unique code is made according to algorithms which allow to prevent its counterfeiting.

Still, according to another embodiment variant of the recognition means not shown herein, it comprises an RFID element reader to be coupled to the animal-owner pair. Thereby, to take advantage of the accommodation facility for animals, the owner identifies himself and his animal by the recognition means and the accommodation facility generates an RFID element. Subsequently, when picking up the animal from the accommodation facility, the owner identifies himself by passing the aforesaid RFID element on the reader and, then, the accommodation facility identifies the animal-owner pair and allows the correct box to be opened.

According to other embodiment variants, also not depicted, the recognition means comprise a token dispenser which, after identifying the animal and its owner, issues a token which the owner keeps until the animal is picked up, which will occur, in fact, by inserting the token in the appropriate receiver for the recognition of the correct pair.

Therefore, from the above it can be seen that the identification data recognition means can be any as long as they allow, in fact, the identification of the correct animal-owner pair.

Obviously, all of the above is also allowed by the fact that the accommodation facility comprises, according to another aspect of the invention, at least one control logic unit **11** to which at least one memory circuit **12** is connected in which, in fact, the computer product is stored. In detail, the computer product is suitable to be run by the control logic unit **11.**

Moreover, advantageously, this allows to computerise not only the identification and recognition process of the animal-owner pair, but also the possible subsequent management of the animal while it is housed in the accommodation facility.

For what has been said so far, it should be noted that the accommodation facility 1 of the invention could be used even in the absence of personnel dedicated to its management, since it can operate similarly to the goods collection points of international sales chains, also known as 'lockers'.

In order to allow greater ease of use of the accommodation facility **1,** according to another aspect of the invention, it comprises a screen **14.**

Advantageously, the presence of the screen **14** allows the owner to view a set of information related, by way of non-limiting example, to the number of the box **2,** the size thereof, the time of entry, the cost of the rate.

Moreover, according to a further aspect of the invention, the accommodation facility **1** further comprises a data entry unit **15** available to the owner. In particular, in the embodiment depicted herein, the data entry unit **15** is incorporated in the screen **14** which, therefore, is of the touch screen type. However, both this aspect and the presence of the screen **14** should not be considered limiting features for different embodiments according to which, for example, the screen is not present and the data entry unit is a keyboard.

Advantageously, the presence of the data entry unit **15** allows the owner to enter a possible set of information on the identity and needs of the animal. In fact, through the data entry unit **15,** for example, it is possible to manually enter the microchip number of the animal if known by the owner, thus without using the microchip reader **5.**

Advantageously, this also allows the operation of the accommodation facility **1** to be guaranteed even when the microchip reader **5** is not operating.

According to another aspect of the invention, the accommodation facility **1** for animals further comprises a payment terminal **17.** In particular, it allows payment by POS and cash, without any limits for the present invention.

Advantageously, the presence of the payment terminal **17** allows the owner to pay, at the entrance or at the exit, the amount for the stay of the animal at the accommodation facility **1.**

Still advantageously, the presence of the payment terminal **17** allows to maximise the autonomy of the accommodation facility **1** of the invention.

Moreover, advantageously, the autonomy of the accommodation facility **1** allows the owner to leave his pet there for a few minutes or for a few hours without any limits for the present invention.

However, even the presence of the payment terminal **17** should not be considered limiting for different embodiments of the invention according to which it is not present and the payment is made, for example, directly to the operator or with online means of payment.

According to a further aspect of the invention, the accommodation facility **1** comprises hydraulic connections **7** and electrical connections **8.** In particular, these are direct connections to the hydraulic network and the electricity network to provide water and electricity to the boxes **2** for various purposes. However, such an aspect must not be considered limiting for different embodiments of the invention. In fact, according to some embodiments not shown herein, the accommodation facility comprises a tank for the supply of water. In this sense, in order to ensure the constant presence of water, it will be sufficient to fill such a tank whenever it is emptied.

With reference, instead, to the supply of electricity, according to some embodiment variants of the invention, the accommodation facility comprises electricity generators of various kinds, whether batteries, photovoltaic panels or other renewable energy systems, without any limits for the present invention.

Advantageously, the presence of water tanks and electricity generators makes the accommodation facility of the invention even more autonomous and, consequently, easy to use for the manager. In fact, the installation in this case does not require any type of work or connection, only the identification of a suitable space.

However, according to further embodiments of the invention, the hydraulic and electrical connections are a mixture between the aforesaid connections to the main networks and generators or tanks of various kinds.

Thereby, advantageously, the accommodation facility **1** is supplied with electricity and water.

From the above, it still advantageously follows that the accommodation facility **1** of the invention is autonomous in the management of the animals present inside the boxes **2.**

As mentioned above, the accommodation facility **1** of the invention is modular.

In detail, it should be noted that, according to another aspect of the invention, the hydraulic **7** and electrical **8** connections can be connected in a cascade from one of the boxes **2** to another.

In particular, the accommodation facility **1** comprises a main pipe connected to the hydraulic network, from which a plurality of "T" -shaped tubular joints branch out for the water supply of all the boxes **2.**

Advantageously, the above allows a rapid assembly of the accommodation facility **1** as well as an easy disassembly in case of need. It is clear, in fact, that adding one or more boxes **2** is practical and quick thanks to the hydraulic **7** and electrical **8** connections which can be connected in a cascade. The same applies for the removal of some boxes **2.**

This still allows, advantageously, to spend little time in the assembly and disassembly of the accommodation facility **1** of the invention with respect to what occurs with the accommodation facilities of the prior art.

It follows, advantageously, that in the event of a sudden increase in requests to host animals, the facility manager can quickly add boxes **2.** The same applies in the event of a need to remove boxes **2,** possibly several.

Obviously, however, such an aspect should not be considered limiting for different embodiments of the invention according to which the distribution of water in the various boxes occurs in different manners.

The supply of water and energy to the boxes **2** has several functions. First, it provides water to the animals and lighting to the boxes. But that is not all.

In fact, thanks to the presence of the hydraulic **7** and electrical **8** connections, it is also possible to provide the animals with heating and cooling.

Advantageously, the above allows the accommodation facility **1** to be used in all seasons, outdoors or indoors, without any limits.

With regard to the supply of water, more generally, according to another aspect of the invention, the accommodation facility **1** comprises a food dispenser **10** for the animal for each box **2.**

Moreover, according to a further aspect of the invention, the food dispenser **10** comprises a sensor for detecting an empty state.

Advantageously, the above allows to automatically detect the absence of water /or food in the food dispenser **10** and therefore, still advantageously, to automatically replenish it.

It follows that, advantageously, the above allows, once again, autonomy in the management of the accommodation facility **1** of the invention.

It should be noted, as regards the autonomy in the management of the accommodation facility **1,** according to another aspect of the invention, it comprises an automatic cleaning and sanitising system for the boxes **2.**

In particular, the system comprises a water dispenser with soap and sanitising substance as well as a washing fluid drainage duct.

Advantageously, the presence of the automatic cleaning and sanitising system allows to clean and disinfect the boxes **2** every time an animal is picked up.

This allows, still advantageously, to keep the boxes **2** clean.

It follows, advantageously, that the presence of the cleaning and sanitising system allows to reduce if not avoid the risk of transmission of any diseases among the animals which are accommodated in the boxes **2.**

It is evident that everything described so far allows a manager of a hotel, a museum or any other recreational place or any other facility suitable for accommodating users, to also accommodate the users' pets in potentially unlimited numbers and without the use of expert personnel dedicated to the assistance and management of the animals hosted inside the accommodation facility **1** of the invention.

Obviously, the foregoing should not regardless be considered limiting for different embodiments of the invention according to which a person is employed who is specially assigned to manage the accommodation facility itself.

According to another aspect of the invention, the accommodation facility **1** comprises a video surveillance system **18.**

Advantageously, it allows the owner and the manager to control the status of the animal remotely.

Obviously, although not depicted in the figures, to allow the aforesaid remote connection, the video surveillance system **18** comprises connection means to a data network.

Operationally, the owner who wants to take advantage of the accommodation facility **1** for animals, acquires **20** the identification data of his animal, reading the microchip by means of the microchip reader **5.** Thereby, the identification data is processed **21** by means of the computer product which, therefore, generates **22** a unique identification code of the animal-owner pair. Subsequently, by means of the control logic unit **11,** the owner can select the size of the box **2** most suitable for his animal and then define whether or not it needs food for the time it stays in the box **2.** At this point, one of the boxes **2** opens and then the owner places **23** the animal inside the box **2** itself.

Subsequently, when picking up the animal from the box **2,** the owner is recognised as the owner of his animal by having his identification data read by the recognition means **4,** makes the payment through the payment terminal **17** and the box **2** containing the animal corresponding to the read identification data opens. At this point the owner picks up his pet.

From the above, it is evident that the accommodation facility **1** of the invention, advantageously, allows the owner to leave his pet there for a few minutes or for a few hours without any limits for the present invention.

In light of the foregoing, it is understood that the accommodation facility for animals of the invention achieves all the prefixed purposes.

In particular, the accommodation facility for animals of the invention is easily manageable.

In other words, it allows a manager of a hotel, museum, cable car, bathing facility, or any other premises suitable for accommodating people, to accommodate pets.

It follows that the accommodation facility for animals can be extended at will without creating discomfort for the manager.

In fact, it is easily installable.

From the above it follows that the accommodation facility of the invention is adaptable in capacity to the number of animals to be hosted.

It follows that it allows the owner to take the animal with him whenever he leaves the house.

Moreover, the accommodation facility for animals is easy to manage and does not require an excessive number of personnel or does not require specialised personnel.

Rather, it is even completely autonomous.

The invention is subject to numerous modifications and variations, all falling within the appended claims. Moreover, all the details may furthermore be replaced by other technically equivalent elements, and the materials may be different if required, without departing from the scope of protection of the invention defined by the appended claims.

## Claims

1. An accommodation facility for animals, **characterised in that** it is modular, comprising one or more boxes **(2)** which can be coupled together, said accommodation facility **(1)** also comprising:
- at least one control logic unit **(11);**
- at least one memory circuit **(12)** operatively connected to said at least one control logic unit **(11);**
- at least one computer product stored in said at least one memory circuit **(12)** and suitable to be run by said at least one control logic unit **(11);**
- at least one recognition means **(4)** of identification data at least of the animal, said identification data being processed by said at least one computer product so as to generate one or more unique codes for identifying at least one animal-owner pair.

2. Accommodation facility according to claim 1, **characterised in that** said at least one recognition means **(4)** of identification data comprise at least one microchip reader **(5)** of the animal.

3. Accommodation facility according to claim 1 or 2, **characterised in that** said at least one identification data recognition means comprise at least one RFID element reader to be coupled to the animal-owner pair.

4. Accommodation facility according to the preceding claims, **characterised in that** it comprises at least one automatic cleaning and sanitising system of said one or more boxes **(2).**

5. Accommodation facility according to any one of the preceding claims, **characterised in that** it comprises hydraulic **(7)** and electrical **(8)** connections to provide said accommodation facility **(1)** with at least electrical power and at least water, said hydraulic **(7)** and electrical **(8)** connections being connectable in cascade from at least one of said one or more boxes **(2)** to another.

6. Accommodation facility according to any one of the preceding claims, **characterised in that** it comprises electricity generators for the power supply of said accommodation facility.

7. Accommodation facility according to one or more of the preceding claims, **characterised in that** it comprises at least one tank for the supply of water.

8. Accommodation facility according to one or more of the preceding claims, **characterised in that** it comprises one or more food dispensers **(10)** for the animal, said one or more food dispensers **(10)** comprising at least one sensor for detecting an empty state.

9. Method for managing an accommodation facility **(1)** for animals according to one or more of the preceding claims, **characterised in that** it comprises the following steps:
- acquiring **(20)** said identification data by means of said at least one recognition means **(4)** of identification data;
- processing **(21)** said identification data by means of said at least one computer product;
- generating **(22)** at least one unique identification code of the animal-owner pair;
- placing **(23)** the animal inside one of said one or more boxes **(2).**

10. Method for managing an accommodation facility **(1)** for animals according to claim 9, **characterised in that** it further comprises the following steps:
- reading said identification data by means of said at least one recognition means **(4);**
- picking up the animal corresponding to said read identification data from said one or more boxes **(2).**
